Europäisches Patentamt

(19) European Patent Office

Office européen des brevets

(11) EP 0 956 695 B1

(12) **EUROPEAN PATENT SPECIFICATION**

(45) Date of publication and mention
of the grant of the patent:
**06.11.2002 Bulletin 2002/45**

(51) Int Cl.7: **H04N 5/14**, H04N 5/235

(21) Application number: **98901057.4**

(86) International application number:
**PCT/JP98/00388**

(22) Date of filing: **30.01.1998**

(87) International publication number:
**WO 98/034400 (06.08.1998 Gazette 1998/31)**

(54) **SCENE-MOTION BASED DYNAMIC SHUTTER SPEED ADJUSTMENT SYSTEM AND METHOD**

VORRICHTUNG UND VERFAHREN ZUR SZENENBEWEGUNGSBASIERTEN DYNAMISCHEN
ANPASSUNG DER VERSCHLUSSGESCHWINDIGKEIT EINER VIDEOCAMERA

SYSTEME ET PROCEDE POUR REGLER DYNAMIQUEMENT LA VITESSE D'OBTURATION SUR
LA BASE DU MOUVEMENT DE LA SCENE

(84) Designated Contracting States:
**DE FR GB**

(30) Priority: **31.01.1997 US 792279**

(43) Date of publication of application:
**17.11.1999 Bulletin 1999/46**

(73) Proprietor: **SHARP KABUSHIKI KAISHA
Osaka-shi, Osaka-fu 545-0013 (JP)**

(72) Inventor: **SEZAN, Muhammed, Ibrahim
Camas, WA 98607 (US)**

(74) Representative: **Müller, Frithjof E., Dipl.-Ing.
Müller Hoffmann & Partner
Patentanwälte
Innere Wiener Strasse 17
81667 München (DE)**

(56) References cited:
**EP-A- 0 388 936        US-A- 5 030 984**

- **CHIOU-SHANN FUH ET AL: "MOTION
  DISPLACEMENT ESTIMATION USING AN
  AFFINE MODEL FOR IMAGE MATCHING"
  OPTICAL ENGINEERING, vol. 30, no. 7, 1 July
  1991, pages 881-887, XP000217388**
- **LEE M -C ET AL: "A LAYERED VIDEO OBJECT
  CODING SYSTEM USING SPRITE AND AFFINE
  MOTIONMODEL" IEEE TRANSACTIONS ON
  CIRCUITS AND SYSTEMS FOR VIDEO
  TECHNOLOGY, vol. 7, no. 1, February 1997,
  pages 130-144, XP000678886**

**Description**

Field of the Invention

This invention relates to a scene-motion based shutter speed adjustment system and a method of adjusting shutter speed based on motion within a scene in accordance with the precharacterizing parts of the independent claims 1 and 5, respectively. A scene-motion based shutter speed adjustment system and a method of adjusting shutter speed based on motion within a scene of that kind are respectively known from EP-A-0 388 936.

Background of the Invention

There are a number of still and video cameras that are known that will automatically adjust shutter speed based on a detected motion component of the image being captured. Some of these known devices utilize an auto-focus mechanism to determine scene motion which, unfortunately, limits the detected motion to motion along the optical axis. While such a limitation is advantageous for some purposes when used in a still camera, it does little to eliminate blur in the case of a video camera trying to capture motion moving with a perpendicular component to the optical axis. Other known devices adjust shutter speed, but do not relate the newly adjusted shutter speed to the existing shutter speed. Some known devices are operable only to increase shutter speed. There are many instances when it is desirable also to provide an automatic decrease in shutter speed, along with a decrease in lens aperture, thereby to provide a greater depth-of-field.

It is desirable to utilize as high a shutter speed as possible to capture a moving object, particularly when an object is moving perpendicular to the optical axis of the camera lens. At the same time, it is desirable to maintain, under normal circumstances, a small aperture to maintain a larger depth of field so that as much of the image as possible will be in focus. These two opposing criteria are generally accommodated by some form of automatic exposure control which relates the shutter speed, aperture, and the lighting conditions to optimize the image, usually by providing a small aperture and a low shutter speed. Such features are generally combined with an automatic focusing mechanism. On many video, and some still, cameras, an image stabilization system is provided to detect camera motion and to compensate for such motion. As is well known to those of skill in the art, as the shutter speed increases, the aperture must also increase to admit the requisite amount of light, resulting in a decrease in depth of field which also decreases the image sharpness.

EP-A-0 388 936 discloses a shutter speed adjustment system and method which is a part of an image stabilizing system of an image pickup device. That is, the image pickup device described in this document is directed to produce an appreciable image, even if an image is picked up in a fluctuating state, for example, when the camera including the image pickup device is handled by an unskilled person or an image is taken from a movable point such as a car. In one embodiment depicted in Fig. 6 of this document, an exposure time is switched between 1/240 and 1/60 s by an exposure time control means in accordance with a fluctuation stabilizing switching signal. A further embodiment depicted in Fig. 7 of this document supplies an externally applied exposure time setting signal to the exposure time control means when an external fluctuation stabilizing switching signal is in its on-state. A further embodiment depicted in Fig.14 of this document supplies an external fluctuation stabilizing switching signal which can achieve any of 95 %, 90 %, 75 %, 50 % value for the fluctuation stabilization effect. According to this external reference value, a computing means computes an exposure time between 1/60 to 1/500 s which is supplied to an exposure time control means. In a further embodiment of the known image pickup device shown in Fig. 14 of this document, an exposure time is computed by computing means on the basis of a magnitude of a motion vector provided by a fluctuation stabilizing means and on the basis of a quantity of light of an object to be imaged from the image pickup. At first, the computing means derives a minimum exposure time required for imaging at sufficient S/N ratio based on the received quantity of light and next according to the magnitude of motion vector, the computing means derives a longer exposure time, if a maximum value of the magnitudes of the motion vectors at the several previous fields of the image is smaller than the maximum value of the minimum exposure time, and a shorter exposure time, if it is larger. The computing means outputs the computed result to the exposure time control means. In summary, the image pickup device disclosed in document EP-A-0 388 936 neither describes nor suggests to design a shutter speed controller to set a new shutter speed as a function of a pre-set current shutter speed and a determined scene-motion parameter.

US-A-5,030,984 provides a method and an apparatus by which motion of a scene is detected by sensing the changing luminance over time between sequential images at each image pixel site along with the changes in luminance at neighboring pixel sites. These changes are then used to compute the displacement of the entire image as well as a direction independent degree of image change. With a total displacement computed and represented by signals, the signal may then be used to control in real time camera shutter speed, aperture opening, and/or the movement of a film in a direction that tracks with the motion so as to minimize blur on the recorded image. This known method and apparatus 2 are neither disclosing nor suggesting to design a shutter speed controller to set a new shutter speed as function of the pre-set current shutter speed and a determined scene motion parameter.

It is an object of this invention to provide a dynamic shutter speed adjustment mechanism, and method for dynamically adjusting the shutter speed, such that the shutter speed is increased as scene motion increases.

It is another object of this invention to provide a dynamic shutter speed adjustment mechanism, and method for dynamically adjusting the shutter speed, such that the shutter speed is decreased as the scene motion decreases.

Another object of the invention is to provide a dynamic shutter speed adjustment mechanism and method which adjusts shutter speed based on the dominant motion in a scene.

Yet another object of the invention is to provide a dynamic shutter speed adjustment mechanism that is based on the current shutter speed.

A further object of the invention is to provide a dynamic shutter speed adjustment mechanism and method which adjusts shutter speed based on scene motion regardless of whether that motion is perpendicular or parallel to the optical axis of the camera lens.

Summary of the Invention

To solve the above object, a shutter speed adjustment system and method according to claims 1 and 5 are provided.

These and other objects and advantages of the invention will become more fully apparent as the description which follows is read in conjunction with the drawings.

Brief Description of the Several Views of the Drawing

Fig. 1 is a block diagram depicting the shutter speed adjustment system of the invention.

Fig. 2 is a flow chart depicting the method of the invention.

Detailed Description of the Preferred Embodiment

The shutter speed adjustment system and method of the invention is primarily intended for use with video cameras, and specifically for use with consumer digital video recording equipment (DVCR), however, the system and method may also be suitable for use with conventional, analog video recording equipment, and with still cameras, whether film-based, advanced photo system or digital.

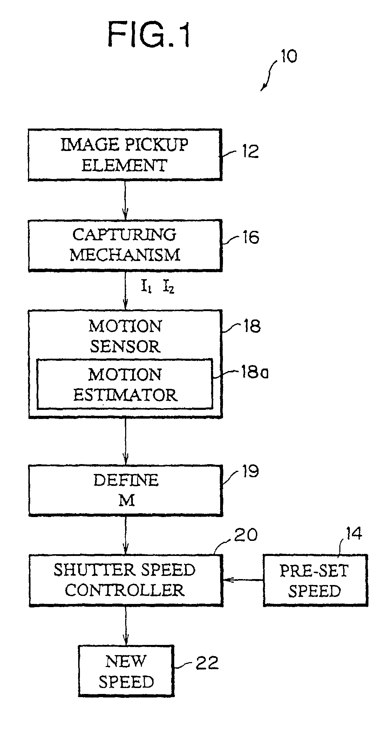

Turning initially to Fig. 1, a block diagram representing the shutter speed adjustment system of the invention is depicted generally at 10. It should be appreciated that all of system 10 is incorporated within a video camera. The video camera includes an image pick up element 12, which may be some form of charge-coupled device (CCD). Image pick up element 12 is operating at what is referred to herein as a current, or pre-set, shutter speed ($S_{PRE}$) 14.

A capturing mechanism 16 is operable to capture plural images, designated $I_1$ and $I_2$ from image pick up element 12. There may be several components of the video camera which operate as a capturing mechanism, including the video tape or some other form of memory device, however, as used herein, "capturing mechanism" designates a memory device, which is most likely some form of solid state integrated circuit.

Data from capturing mechanism 16 is transmitted to a motion sensor/estimator 18, also referred to herein as a motion sensor, which performs analysis on the plural images, $I_1$, $I_2$, and determines what is referred to herein as a scene-motion parameter (M). Sensor/estimator 18 includes a motion estimator, 18a, which estimates motion on the basis of real motion vectors, as determined between successive, usually sequential, images. Sensor/estimator 18 then defines M, block 19, which is a quantitative indication of the dominant motion content of the scene. Motion sensor 18 may be part of an image stabilization system, or may be a separate camcorder component

A shutter speed controller 20 analyzes pre-set shutter speed 14 and scene-motion parameter M to determine a new shutter speed ($S_{NEW}$) 22. New shutter speed 22 then becomes the current shutter speed which operates with image pick up element 12. As the scene-motion parameter M changes as a result of motion within the scene detected by image pick up element 12, the shutter speed controller continues to change the shutter speed, depending on the operation mode, which will be described later herein. Changes in the shutter speed are, of course, constrained by lighting and available aperture, and appropriate safeguards are built into shutter speed controller speed 20 to limit the increase of shutter speed so that $S_{NEW}$ is not so fast as to cause the image to become too dark, and also to limit any decrease in shutter speed so that the image does not become overexposed. In this regard, shutter speed control 20 also regulates the lens aperture.

Video cameras, or camcorders, utilize an electronic shutter mechanism. This mechanism determines the amount of time that an image is allowed to remain on image pick up element 12 before it is transferred to the recording mechanism of the camcorder, be that recording mechanism video tape or some form of integrated circuit memory. Examples of shutter speeds are shown in Table 1, both as for $S_{PRE}$ and $S_{NEW}$. At low shutter speeds, i.e., 1/60t 1/100th, 1/250th, the image will suffer from motion blur if there is significant motion in the scene.

The extent of the motion blur will depend on the amount of motion and the shutter speed. Scene motion that is perpendicular to the optical axis of the lens is particularly susceptible to motion blur. However, any motion that has a component perpendicular to the optical axis may be blurred if its motion is relatively fast. If the shutter speed is low, the blur will limit the visual quality of the video. This is especially true if a still image is generated from the video. The invention described herein analyzes the motion in the scene and, if appropriate, increases the shutter speed to eliminate blur. It is difficult to remove motion blur via post-processing without introducing objectionable, spurious artifacts, such as edge ringing, to the final image. In one mode of operation, when the amount of motion within the scene decreases, the shutter speed is reset to its original value. In the second mode of operation, when the scene motion decreases, the shutter speed may be reset to its original value, or, if appropriate, to a lower value.

Video cameras utilize a number of mechanisms for capturing an image. Additionally, video may be interlaced or non-interlaced. In the case of interlaced video, a first field provides an image in alternating rasters of the image pick up element and the next image fills in the rasters which were not filled during the first capture. The images in this case are referred to as image fields, with two successive image fields being required to form a complete image. In the case of non-interlaced video, all of the rasters are filled in a single pass, making what is referred to as a "frame," not unlike a frame of movie film. Although the motion sensor could select any fields or frames for analysis of the scene motion parameter, the most practical technique is to analyze two sequential, successive fields or frames to determine the scene motion parameter. As used herein, $I_1$ designates the first field or frame, and $I_2$ designates the second frame or field.

The motion content of the scene may be determined in a number of ways. The preferred method of this invention is to utilize the dominant motion component of the scene in determining the motion content Dominant motion is in general due to camera movement, i.e., panning, shaking, or camera zoom. Dominant motion may also be due to an object whose size occupies a substantial portion of the image field and which is in rapid movement. By far the main concern, particularly for DVCR, is with dominant motion that is the result of a fast moving camera, or rapid zoom.

Dominant motion may be modeled using a four parameter rotation-zoom-translation model:

$$\begin{bmatrix} u \\ v \end{bmatrix} = \begin{bmatrix} \alpha_1 & -\alpha_2 \\ \alpha_2 & \alpha_1 \end{bmatrix} \begin{bmatrix} x \\ y \end{bmatrix} + \begin{bmatrix} \alpha_3 \\ \alpha_4 \end{bmatrix} \qquad (1)$$

here which has the parameters $\alpha_1$, $\alpha_2$, $\alpha_3$, and $\alpha_4$. The coordinates [xy] at frame $I_1$ are related to coordinates [uv] in frame $I_2$ using the four-parameter motion transformation. All of the points in the [xy]-plane are rotated by an angle theta about the origin, scaled (zoom) by k, where k is a constant, and translated by [$\alpha_3$ $\alpha_4$]. In that case, $\alpha_1 = k\cos\theta$ and $\alpha_2 = -k\sin\theta$.

Dominant motion may also be modeled by a six-parameter affine model that adds directional scaling and sheer to the four parameter model, resulting in:

$$u = \alpha_{11}x + \alpha_{12}y + \alpha_{13} \qquad (2)$$

$$v = \alpha_{21}x + \alpha_{22}y + \alpha_{23} \qquad (3)$$

Parameters of the dominant motion model (rotation-zoom-translation or affine) may be estimated by using a multi-resolution, iterative algorithm. J. Bergen et al., *"A Three-Frame Algorithm for Estimating Two-Component Image Motion," IEEE* Trans. Pattern Anal. & Mach. Intel., Vol. 14, No. 9, pp886-896, September 1992. It is also possible to use higher order models. such a 8-parameter perspective models. S. Mann et al., *"Video Orbits of the Projective Group: A New Perspective on Image Mosaicing,"* MIT Media Laboratory Perceptual Computing Section Technical Report No. 338, 1995.

In one embodiment of this invention, dominant motion is modeled by the rotation-zoom-translational model In this embodiment, only the translational parameters are estimated, while the motion content is determined on the basis of the magnitude of the translational component, i.e.,

$$M = (\alpha_3^2 + \alpha_4^2)^{1/2} \qquad (4)$$

In other embodiments, both translation and rotation components may be used in deriving the scene motion parameter. An appropriate function of the parameters $\alpha_1$, $\alpha_2$, $\alpha_3$, and $\alpha_4$ may be defined as an indicator of the motion content, i.e.,

$$M = f(\alpha_1, \alpha_2, \alpha_3, \alpha_4) = (\alpha_1^2 + \alpha_1^2 + \alpha_3^2 + \alpha_4^2)^{1/2}.$$

Other motion estimation schemes may be used, such as tieing the motion sensor to an image stabilization system, whether electronic or optical. Such an image stabilizer provides an estimate of the motion, which is usually some type of dominant motion estimation. The output of the motion estimator of the image stabilizer may be then directed, along the current shutter speed, to the shutter speed controller.

The automatic shutter speed adjustment mechanism of the invention has two modes of operation: in the first mode of operation, the shutter speed may only increase beyond the speed that is manually set by the user, or which is the default setting of the camera, referred to herein as the preset shutter speed. In the second mode of operation, the shutter speed continuously changes according to the scene motion parameter, M. regardless of the initial setting.

Referring now to Table 1, the first mode of operation will be described. As previously noted, in this mode, the shutter speed only increases above its initial, or pre-set, value, and, as also previously noted, is constrained by the light available to capture the scene. In this mode, when recording ceases, the shutter speed is reset to the original, pre-set value. Unless there is sufficient motion in the scene to trigger a shutter speed increase, the shutter speed is not changed. In Table 1, the shutter speed values along the left side of the Table are the pre-set values, $S_{PRE}$, and the values along the top are the new shutter speed values after the adjustment mechanism of the invention has been implemented, $S_{NEW}$.

## $S_{NEW}$ (seconds)

|  |  | 1/60 | 1/100 | 1/250 | 1/1000 | 1/4000 | 1/7000 | 1/10000 |
|---|---|---|---|---|---|---|---|---|
| $S_{PRE}$ (Sec.) | 1/60 | $0 \leq M < a1$ | $a1 \leq M < a2$ | $a2 \leq M < a3$ | $a3 \leq M < a4$ | $a4 \leq M < a5$ | $a5 \leq M < a6$ | $M \geq a6$ |
| | 1/100 | | $0 \leq M < b1$ | $b1 \leq M < b2$ | $b2 \leq M < b3$ | $b3 \leq M < b4$ | $b4 \leq M < b5$ | $M \geq b5$ |
| | 1/250 | | | $0 \leq M < c1$ | $c1 \leq M < c2$ | $c2 \leq M < c3$ | $c3 \leq M < c4$ | $M \geq c4$ |
| | 1/1000 | | | | $0 \leq M < d1$ | $d1 \leq M < d2$ | $d2 \leq M < d3$ | $M \geq d3$ |
| | 1/4000 | | | | | $0 \leq M < e1$ | $e1 \leq M < e2$ | $M \geq e3$ |
| | 1/7000 | | | | | | $0 \leq M < f1$ | $M \geq f1$ |
| | 1/10000 | | | | | | | $M \geq 0$ |

## Table 1

In Table 1, ai, bi, ci, di, ei and fi are threshold values for the scene motion content parameter M, where i is an integer between 1 and 6 for this particular set of shutter speeds. Different cameras may have different shutter speed capabilities. Examples of how the adjustment mechanism of the invention will adjust the shutter speed follow:

If the pre-set shutter speed is 1/60 second, for $\theta \leq M < a1$, the shutter speed does not change. If $a2 \leq M < a3$, the shutter speed increases to 1/250 sec. If the motion content parameter increases further, such that $a5 \leq M < a6$, the shutter speed increases to 1/7000 sec. If the motion content parameter decreases such that $\emptyset \leq M < a1$, the shutter speed will decrease to the original preset value of 1/60 sec.

If the current, or pre-set shutter speed, is 1/1000 sec., and $d1 \leq M < d2$, then the shutter speed will be increased to 1/4000 sec. If the scene motion content decreases to $\emptyset \leq M < d1$, the shutter speed will return to its original, pre-set value of 1/1000. In this mode, the shutter speed will never decrease below its original, pre-set value. If, in this mode, the shutter speed is set to 1/10000 sec., the speed will not change regardless of the scene motion content parameter.

It should be appreciated that in the first mode of operation, the adjustment mechanism allows for conservative up-shifting as the pre-set value increases. This is accomplished by having bi > a(i+1), for i =1, 2, 3, 4, 5; ci > b(i+1), for i = 1, 2, 3, 4; di > c(i+1), for i = 1, 2, 3; ei > d(i+1), for i = 1, 2; and f1 > e2. This schema is used to insure that the adjustment mechanism is sufficiently robust to prevent the overestimation of scene motion content, which, in practice, may result in darker images. This mode also provides protection against image blur when the motion momentarily exceeds the level at which the pre-set value may not be sufficiently large.

Table 2 depicts the second mode of operation, in which the shutter speed continuously changes according to the scene motion parameter M, regardless of the initial setting. This mode may be implemented using the constraints of Table 2 between the value of M and the shutter speed S, which is allowed to constantly change, and which is not limited to a lowest speed of the initial, or preset value.

Table 2

| S | 1/60 | 1/100 | 1/250 | 1/1000 | 1/4000 | 1/7000 | 1/10000 |
|---|------|-------|-------|--------|--------|--------|---------|
| M | $0 \leq M < a1$ | $a1 \leq M < a2$ | $a2 \leq M < a3$ | $a3 \leq M < a4$ | $a4 \leq M < a5$ | $a5 \leq M < a6$ | $M \geq a6$ |

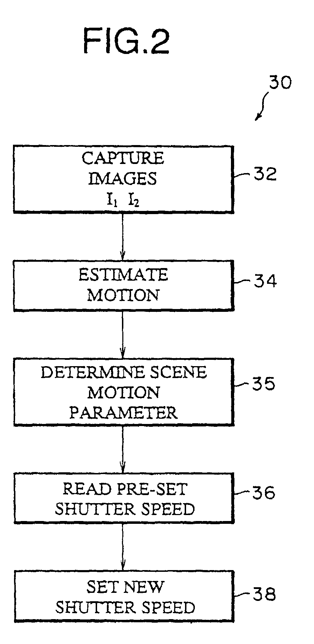

Referring now to Fig. 2, the method of the invention, depicted generally at 30, will be summarized. Initially, images $I_1$, $I_2$ are captured at a current, or pre-set, shutter speed, block 32. Motion sensor/estimator 18 then estimates scene motion, block 34, on the basis of real motion vectors as determined, in the preferred embodiment, between sequential images. The scene motion parameter, M, is then defined, block 35, based on the scene motion between $I_1$ and $I_2$. The pre-set shutter speed 14 is read, block 36, and shutter speed controller 20 sets a new shutter speed, block 38. Analysis of scene motion continues, as previously described, to further increase or decrease the shutter speed, depending on scene motion and lighting.

Thus, an automatic shutter speed adjustment system, and a method for automatically adjusting the shutter speed, has been disclosed. The system and method of the invention provide for an appropriate increase or decrease of shutter speed to match scene motion as captured by a image pick up element in a video camera.

Although a preferred embodiment of the invention, and a variation thereof have been disclosed herein, it should be appreciated that further variations and modifications may be made to the invention without departing from the scope of the invention as defined in the appended claims.

## Claims

1. A shutter speed adjustment system for adjusting shutter speed of a video camera or a still-image camera based on a scene motion, comprising:

   an image pickup element (12) within the video camera or the still-image camera, said pickup element being set to operate at one of a plurality of different preset current shutter speeds ($S_{PRE}$);
   a capturing mechanism (16) for capturing successive fields or frames ($I_1$, $I_2$) of plural images from said image pickup element (12); and
   a motion sensor (18, 19) for estimating motion between the successive fields or frames ($I_1$, $I_2$) and for determining a scene motion parameter (M) on the basis of the detected motion within the scene,
   a shutter speed controller (20) for setting respective new shutter speeds ($S_{NEW}$) as a function of the preset current shutter speeds ($S_{PRE}$) and the determined scene motion parameter (M), by using a plurality of threshold values ($a_i$, $b_i$, $c_i$, $d_i$, $e_i$, $f_i$), wherein for each of the different preset shutter speeds a different set of threshold values is used, wherein
   said motion sensor (18, 19) determines the scene motion parameter (M) by detecting the dominant motion within a scene by using a four parameter rotation-zoom-translation model which relates the coordinates [xy] at a first field or frame ($I_1$) to coordinates [uv] in a second field or frame ($I_2$) by

$$\begin{bmatrix} u \\ v \end{bmatrix} = \begin{bmatrix} \alpha_1 & -\alpha_2 \\ \alpha_2 & \alpha_1 \end{bmatrix} \begin{bmatrix} x \\ y \end{bmatrix} + \begin{bmatrix} \alpha_3 \\ \alpha_4 \end{bmatrix}$$

   wherein all of the points in the xy-plane are rotated by an angle $\Theta$ about the origin scaled by a constant factor k and translated by [$\alpha_3$, $\alpha_4$] and wherein $\alpha_1 = k \cos \Theta$ and $\alpha_2 = -k \sin \Theta$,

or by using a six parameter affine model that adds directional scaling and shear to the four parameter model.

2. The shutter speed adjustment system of claim 1, wherein said motion sensor (18) is an image-stabilizing system.

3. The shutter speed adjustment system of claim 1, wherein said plural images are sequential images.

4. The shutter speed adjustment system of claim 1, wherein said plural images are successive images.

5. A method of adjusting shutter speed in a video camera or a still-image camera based on a motion within a scene, comprising steps of:

capturing (32) successive fields or frames ($I_1$, $I_2$) of plural images at one of a plurality of different preset current shutter speeds ($S_{PRE}$);
determining (35) a scene motion parameter (M) based on a detected (34) motion within the scene between the successive fields or frames ($I_1$, $I_2$) of the plural images,
setting (38) respective new shutter speeds ($S_{NEW}$) as a function of the preset current shutter speeds ($S_{PRE}$) and the determined scene motion parameter (M), using a plurality of threshold values ($a_i$, $b_i$, $c_i$, $d_i$, $e_i$, $f_i$), wherein for each of the different preset shutter speeds a different set of threshold values is used,
said step for determining the scene motion parameter (M) is based on detecting the dominant motion within the scene by using a four parameter rotation-zoom-translation model:

where the coordinates [xy] at a first field or frame ($I_1$) are related to coordinates [uv] in a second field or frame ($I_2$) by

$$\begin{bmatrix} u \\ v \end{bmatrix} = \begin{bmatrix} \alpha_1 & -\alpha_2 \\ \alpha_2 & \alpha_1 \end{bmatrix} \begin{bmatrix} x \\ y \end{bmatrix} + \begin{bmatrix} \alpha_3 \\ \alpha_4 \end{bmatrix}$$

wherein all of the points in the xy-plane are rotated by an angle $\Theta$ about the origin, scaled by a constant factor k and translated by [$\alpha_3$, $\alpha_4$] and wherein $\alpha_1 = k \cos \Theta$ and $\alpha_2 = -k \sin \Theta$,
or by using a six parameter affine model that adds directional scaling and shear to the four parameter model.

6. The method of claim 5, wherein said step of capturing plural images includes capturing sequential images.

7. The method of claim 5, wherein the step of capturing plural images includes capturing successive images.

8. The method of claim 5, wherein said step of determining the scene motion parameter (M) is based on an output from an image stabilizer.

**Patentansprüche**

1. Verschlussgeschwindigkeit-Einstellsystem zum Einstellen der Verschlussgeschwindigkeit einer Videokamera oder einer Einzelbildkamera anhand einer Bewegung in einer Szene mit:

einem Bildaufnahmeelement (12) in der Videokamera oder der Einzelbildkamera, das so einstellbar ist, dass es bei einer von mehreren verschiedenen im Voraus eingestellten aktuellen Verschlussgeschwindigkeiten ($S_{PRE}$) arbeitet;
einem Erfassungsmechanismus (16) zum Erfassen aufeinander folgender Teilbilder oder Vollbilder ($I_1$, $I_2$) mehrerer Bilder von dem Bildaufnahmeelement (12); und
einem Bewegungssensor (18, 19), der die Bewegung zwischen den aufeinander folgenden Teilbildern oder Vollbildern ($I_1$, $I_2$) schätzt und einen Szenenbewegungsparameter (M) auf der Grundlage der erfassten Bewegung in der Szene bestimmt,

einer Verschlussgeschwindigkeit-Steuereinheit (20), die jeweilige neue Verschlussgeschwindigkeiten ($S_{NEW}$) in Abhängigkeit von den im Voraus festgelegten momentanen Verschlussgeschwindigkeiten ($S_{PRE}$) und dem bestimmten Szenenbewegungsparameter (M) unter Verwendung mehrerer Schwellenwerte ($a_i$, $b_i$, $c_i$, $d_i$, $e_i$, $f_i$) festlegt, wobei für jede der verschiedenen im Voraus festgelegten Verschlussgeschwindigkeiten eine andere Menge von Schwellenwerten verwendet wird, wobei

der Bewegungssensor (18, 19) den Szenenbewegungsparameter (M) durch Erfassen der vorherrschenden Bewegung in einer Szene bestimmt, indem er ein Vierparameter-Rotations-Zoom-Translations-Modell verwendet, das die Koordinaten [xy] in einem ersten Teilbild oder Vollbild ($I_1$) mit Koordinaten [uv] in einem zweiten Teilbild oder Vollbilder ($I_2$) durch

$$\begin{bmatrix} u \\ v \end{bmatrix} = \begin{bmatrix} \alpha_1 & -\alpha_2 \\ \alpha_2 & \alpha_1 \end{bmatrix} \begin{bmatrix} x \\ y \end{bmatrix} + \begin{bmatrix} \alpha_3 \\ \alpha_4 \end{bmatrix}$$

in Beziehung setzt, wobei alle Punkte in der xy-Ebene um einen Winkel $\Theta$ um den Ursprung gedreht, um einen konstanten Faktor k skaliert und um [$\alpha_3$, $\alpha_4$] translatorisch bewegt werden und wobei $\alpha_1 = k \cos \Theta$ und $a_2 = -k \sin \Theta$,

oder indem er ein affines Sechsparameter-Modell verwendet, das zu dem Vierparameter-Modell eine Richtungsskalierung und eine Scherung hinzufügt.

2. Verschlussgeschwindigkeit-Einstellsystem nach Anspruch 1, bei dem der Bewegungssensor (18) ein Bildstabilisierungssystem ist.

3. Verschlussgeschwindigkeit-Einstellsystem nach Anspruch 1, bei dem die mehreren Bilder in einer Reihe angeordnete Bilder sind.

4. Verschlussgeschwindigkeit-Einstellsystem nach Anspruch 1, bei dem die mehreren Bilder aufeinander folgende Bilder sind.

5. Verfahren zum Einstellen der Verschlussgeschwindigkeit in einer Videokamera oder einer Einzelbildkamera anhand einer Bewegung in einer Szene, das die folgenden Schritte aufweist:

Erfassen (32) aufeinander folgender Teilbilder oder Vollbilder ($I_1$, $I_2$) mehrerer Bilder mit einer von mehreren verschiedenen im Voraus eingestellten momentanen Verschlussgeschwindigkeiten ($S_{PRE}$);
Bestimmen (35) eines Szenenbewegungsparameters (M) auf der Grundlage einer erfassten (34) Bewegung in der Szene zwischen den aufeinander folgenden Teilbildern oder Vollbildern ($I_1$, $I_2$) der mehreren Bilder,
Festlegen (38) jeweiliger neuer Verschlussgeschwindigkeiten ($S_{NEW}$) in Abhängigkeit von im Voraus eingestellten momentanen Verschlussgeschwindigkeiten ($S_{PRE}$) und dem bestimmten Szenenbewegungsparameter (M) unter Verwendung mehrerer Schwellenwerte ($a_i$, $b_i$, $c_i$, $d_i$, $e_i$, $f_i$), wobei für jede der verschiedenen im Voraus eingestellten Verschlussgeschwindigkeiten eine unterschiedliche Menge von Schwellenwerten verwendet wird,

wobei der Schritt, bei dem der Szenenbewegungsparameter (M) bestimmt wird, auf der Erfassung der vorherrschenden Bewegung in der Szene basiert, indem ein Vierparameter-Rotations-Zoom-Translations-Modell verwendet wird;
wobei die Koordinaten [xy] in einem ersten Teilbild oder Vollbild ($I_1$) mit Koordinaten [uv] in einem zweiten Teilbild oder Vollbild ($I_2$) durch

$$\begin{bmatrix} u \\ v \end{bmatrix} = \begin{bmatrix} \alpha_1 & -\alpha_2 \\ \alpha_2 & \alpha_1 \end{bmatrix} \begin{bmatrix} x \\ y \end{bmatrix} + \begin{bmatrix} \alpha_3 \\ \alpha_4 \end{bmatrix}$$

in Beziehung gesetzt werden, wobei sämtliche Punkte in der xy-Ebene um einen Winkel $\Theta$ um den Ursprung gedreht, um einen konstanten Faktor k skaliert und um [$\alpha_3$, $\alpha_4$] translatorisch bewegt werden und wobei $\alpha_1 = k \cos \Theta$ und $\alpha_2 = -k \sin \Theta$,

oder indem ein affines Sechsparameter-Modell verwendet wird, das zu dem Vierparameter-Modell eine Richtungsskalierung und eine Scherung hinzufügt.

**6.** Verfahren nach Anspruch 5, bei dem der Schritt des Erfassens mehrerer Bilder das Erfassen von in einer Reihe angeordneten Bildern umfasst.

**7.** Verfahren nach Anspruch 5, bei dem der Schritt des Erfassens mehrerer Bilder das Erfassen aufeinander folgender Bilder umfasst.

**8.** Verfahren nach Anspruch 5, bei dem der Schritt, bei dem der Szenenbewegungsparameter (M) bestimmt wird, auf einem Ausgangssignal von einer Bildstabilisierungseinrichtung basiert.

**Revendications**

**1.** Système de réglage de vitesse d'obturation pour régler la vitesse d'obturation d'une caméra vidéo ou d'un appareil photographique sur la base d'un mouvement de scène, comportant :

un élément capteur d'images (12) à l'intérieur de la caméra vidéo ou de l'appareil photographique, ledit élément capteur étant réglé pour fonctionner à une vitesse parmi une multiplicité de différentes vitesses d'obturation courantes préétablies ($S_{PRE}$) ;
un mécanisme de saisie (16) pour saisir des champs ou trames ($I_1$, $I_2$) successifs d'une pluralité images en provenance dudit élément capteur d'images (12) ; et
un détecteur de mouvement (18, 19) pour estimer le mouvement entre des champs ou trames ($I_1$, $I_2$) successifs et pour déterminer un paramètre de mouvement de scène (M) sur la base du mouvement détecté à l'intérieur de la scène ;
un contrôleur de vitesse d'obturation (20) pour établir de nouvelles vitesses d'obturation ($S_{NEW}$) respectives en fonction des vitesses d'obturation courantes préétablies ($S_{PRE}$) et du paramètre de mouvement de scène déterminé (M), en utilisant une multiplicité de valeurs seuil ($a_i$, $b_i$, $c_i$, $d_i$, $e_i$, $f_i$), un ensemble différent de valeurs seuil étant utilisé pour chacune des différentes vitesses d'obturation préétablies, dans lequel
ledit détecteur de mouvement (18, 19) détermine le paramètre de mouvement de scène (M) en détectant le mouvement dominant à l'intérieur d'une scène en utilisant un modèle rotation-zoom-translation à quatre paramètres qui met en relation les coordonnées [xy] au niveau d'un premier champ ou d'une première trame ($I_1$) avec des coordonnées [uv] dans un second champ ou seconde trame ($I_2$) par

$$\begin{bmatrix} u \\ v \end{bmatrix} = \begin{bmatrix} \alpha_1 & -\alpha_2 \\ \alpha_2 & \alpha_1 \end{bmatrix} \begin{bmatrix} x \\ y \end{bmatrix} + \begin{bmatrix} \alpha_3 \\ \alpha_4 \end{bmatrix}$$

relation dans laquelle tous les points situés dans le plan xy subissent une rotation d'un angle $\Theta$ autour de l'origine, sont mis à l'échelle par un facteur constant k et sont translatés par [$\alpha_3$, $\alpha_4$] et dans laquelle $\alpha_1$ = k cos $\Theta$ et $\alpha_2$ = -k sin $\Theta$ ;

ou en utilisant un modèle affine à six paramètres qui ajoute au modèle à quatre paramètres la mise à l'échelle directionnelle et le cisaillement.

**2.** Système de réglage de vitesse d'obturation selon la revendication 1, dans lequel ledit détecteur de mouvement (18) est un système stabilisateur d'images.

**3.** Système de réglage de vitesse d'obturation selon la revendication 1, dans lequel ladite pluralité d'images sont des images séquentielles.

**4.** Système de réglage de vitesse d'obturation selon la revendication 1, dans lequel ladite pluralité d'images sont des images successives.

5. Procédé de réglage de la vitesse d'obturation d'une caméra vidéo ou d'un appareil photographique sur la base d'un mouvement à l'intérieur d'une scène, comportant les étapes consistant :

à saisir (32) des champs ou trames ($I_1$, $I_2$) successifs d'une pluralité d'images à une vitesse parmi une multiplicité de différentes vitesses d'obturation courantes préétablies ($S_{PRE}$) ;
à déterminer (35) un paramètre de mouvement de scène (M) sur la base d'un mouvement détecté (34) à l'intérieur de la scène entre les champs ou trames successifs ($I_1$, $I_2$) de la pluralité d'images ;
à établir (38) de nouvelles vitesses d'obturation ($S_{NEW}$) respectives en fonction des vitesses d'obturation courantes préétablies ($S_{PRE}$) et du paramètre de mouvement de scène déterminé (M), en utilisant une multiplicité de valeurs seuil ($a_i$, $b_i$, $c_i$, $d_i$, $e_i$, $f_i$), un ensemble différent de valeurs seuil étant utilisé pour chacune des différentes vitesses d'obturation préétablies ;
dans lequel ladite étape de détermination du paramètre de mouvement de scène (M) est basée sur la détection du mouvement dominant à l'intérieur d'une scène en utilisant un modèle rotation-zoom-translation à quatre paramètres :

dans lequel les coordonnées [xy] au niveau d'un premier champ ou d'une première trame ($I_1$) sont mises en relation avec des coordonnées [uv] dans un second champ ou seconde trame ($I_2$) par

$$\begin{bmatrix} u \\ v \end{bmatrix} = \begin{bmatrix} \alpha_1 & -\alpha_2 \\ \alpha_2 & \alpha_1 \end{bmatrix} \begin{bmatrix} x \\ y \end{bmatrix} + \begin{bmatrix} \alpha_3 \\ \alpha_4 \end{bmatrix}.$$

relation dans laquelle tous les points situés dans le plan xy subissent une rotation d'un angle $\Theta$ autour de l'origine, sont mis à l'échelle par un facteur constant k et sont translatés par [$\alpha_3$, $\alpha_4$] et dans laquelle $\alpha_1$ = k cos $\Theta$ et $\alpha_2$ = -k sin $\Theta$ ;
ou en utilisant un modèle affine à six paramètres qui ajoute au modèle à quatre paramètres la mise à l'échelle directionnelle et le cisaillement.

6. Procédé selon la revendication 5,dans lequel ladite étape de saisie d'une pluralité d'images comprend la saisie d'images séquentielles.

7. Procédé selon la revendication 5,dans lequel ladite étape de saisie d'une pluralité d'images comprend la saisie d'images successives.

8. Procédé selon la revendication 5, dans lequel ladite étape de détermination du paramètre de mouvement de scène (M) est basée sur une sortie provenant d'un stabilisateur d'images.

# FIG.1

10

```
┌─────────────────────┐
│   IMAGE PICKUP      │──12
│   ELEMENT           │
└─────────────────────┘
           │
           ▼
┌─────────────────────┐
│   CAPTURING         │──16
│   MECHANISM         │
└─────────────────────┘
        $I_1$  $I_2$
           │
           ▼
┌─────────────────────┐
│   MOTION            │──18
│   SENSOR            │
│  ┌───────────────┐  │
│  │   MOTION      │──┼──18a
│  │   ESTIMATOR   │  │
│  └───────────────┘  │
└─────────────────────┘
           │
           ▼
┌─────────────────────┐
│   DEFINE            │──19
│   M                 │
└─────────────────────┘
           │
           ▼
┌─────────────────────┐      ┌──────────────┐
│  SHUTTER SPEED      │──20  │   PRE-SET    │──14
│  CONTROLLER         │◄─────│   SPEED      │
└─────────────────────┘      └──────────────┘
           │
           ▼
┌─────────────────────┐
│   NEW               │──22
│   SPEED             │
└─────────────────────┘
```

# FIG.2

30

```
┌─────────────────────┐
│      CAPTURE        │
│      IMAGES         │──32
│      I₁  I₂         │
└─────────────────────┘
          │
          ▼
┌─────────────────────┐
│     ESTIMATE        │──34
│     MOTION          │
└─────────────────────┘
          │
          ▼
┌─────────────────────┐
│  DETERMINE SCENE    │
│     MOTION          │──35
│    PARAMETER        │
└─────────────────────┘
          │
          ▼
┌─────────────────────┐
│   READ PRE-SET      │──36
│  SHUTTER SPEED      │
└─────────────────────┘
          │
          ▼
┌─────────────────────┐
│     SET NEW         │──38
│  SHUTTER SPEED      │
└─────────────────────┘
```